# EUROPEAN PATENT APPLICATION

(11) **EP 1 555 471 A1**
(43) Date of publication of application: **20.07.2005**
(21) Application number: 03756627.0
(22) Date of filing: 15.10.2003
(51) Int. Cl.: F16K 27/00

(54) **INTEGRATED GAS VALVE**

(30) Priority: 21.10.2002 JP 2002305512
(71) Applicant: CKD Corporation, Komaki-shi, Aichi-ken 485-8551 (JP); Sony Corporation, Tokyo 141-0001 (JP)
(72) Inventor: YOSHIDA, Kazuhiro, c/o CKD CORPORATION, Kasugai-shi, Aichi 486-8530 (JP); INOUE, Takashi, c/o CKD CORPORATION, Kasugai-shi, Aichi 486-8530 (JP); MITOMO, Jugo, c/o SONY CORPORATION, Shinagawa-ku, Tokyo 141-0001 (JP); NARUI, Hironobu, c/o SONY CORPORATION, Shinagawa-ku, Tokyo 141-0001 (JP)
(74) Representative: Hofer, Dorothea, Dipl.-Phys.
(86) International application number: PCT/JP2003/013216
(87) International publication number: WO 2004/036099

(57) **Abstract**

To provide an integrated gas valve in which there is no turbulent portion in carrying gas so that process gas supplied into the carrying gas is not diffused. The integrated gas valve 1 comprising a plurality of opening/closing valves 30 in each of which a valve element 33 is brought into contact with and separated from a valve seat 34 by an actuator 31 to communicate and shut off a valve port 35 with and from a valve chamber 36, the opening/closing valve including a first passage 26 formed through a valve main body 12 so as to be branched midway from the valve port 35 and a second passage 29 formed in the valve main body 12 to extend from an inlet port to the valve chamber, wherein the plurality of opening/closing valves are arranged in line to form a main passage 23 in which the first passages 26 are connected to each other in series directly or through a connecting passage 27 and the second passage 39 of each opening/closing valve is connected to the main passage 23 through the valve chamber 36 and the valve port 35.

## Description

### TECHNICAL FIELD

The present invention relates to an integrated gas valve which changes over several kinds of gases for feeding. More particularly the present invention relates to an integrated gas valve applicable for a semiconductor manufacturing apparatus, which selects a predetermined process gas from several kinds of process gases and feeds that process gas into carrying gas supplied preliminarily.

### BACKGROUND ART

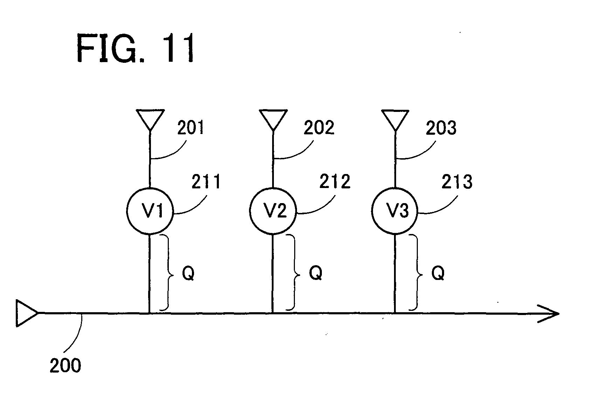

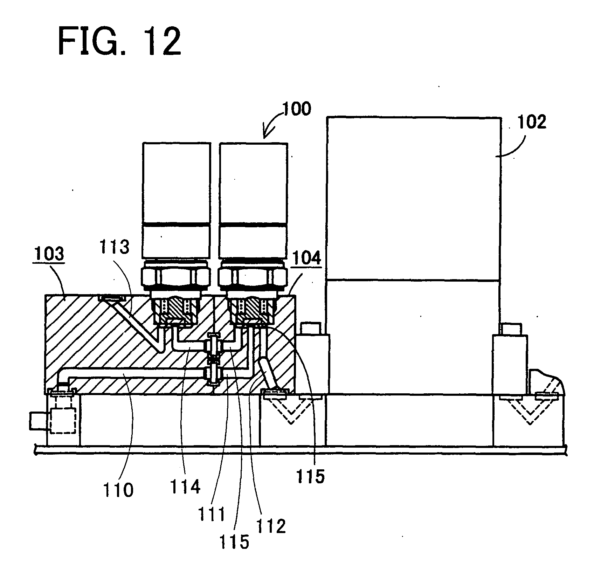

Conventionally, there has been well known a method for manufacturing a semiconductor by supplying gas, which is a material for different processes, little by little so as to form films successively such that they are overlaid. In an integrated gas valve system according to this method, as shown in, for example, a block diagram of FIG. 11, process gas passages 201, 202, 203 are connected to a carrying gas passage 200 and opening/closing valves 211, 212, 213 are provided on each of the process gas passages 201, 202, 203. In this integrated gas valve, a reactor is connected to the carrying gas passage 200 so that carrying gas not affecting a process is always supplied. On the other hand, different process gases are supplied from the process gas passages 201, 202, 203 to the carrying gas passage 200. For the reason, by opening the specified opening/closing valves 211, 212, 213, necessary process gas flows into the carrying gas flowing through the carrying gas passage 200 and is carried to the reactor.

By the way, in the conventional integrated gas valve as shown in FIG. 11, passage portions from each of the opening/closing valves 211, 212, 213 up to the carrying gas passage 200 act as a dead space Q in which gas remains when each valve is closed after the process gas is supplied. Thus, if after a process gas is supplied by opening the opening/closing valve 211, for example, the valve is closed and the same process gas is supplied by changing its concentration, then, the process gases having different concentration are mixed and supplied to the reactor because the previous process gas remains in the dead space Q existing on a secondary side of the opening/closing valve 211. Therefore, such an integrated gas valve having a valve structure in which this dead space is eliminated has been demanded. From this viewpoint, Japanese Unexamined Patent Publication No.2001-254857, which is adopted as a patent document 1 here, has disclosed a valve structure in which the dead space is eliminated from a connecting portion of the passage.

FIG. 12 is a diagram showing a shut-off releasing device 100 described in the patent document 1. Although this shut-off releasing device 100 allows only purge gas to flow in a short time when purging the process gas and its proper purpose is not to eliminate the dead space, such a valve structure which does not allow gas to be deposited as a consequence has been described. That is, the shut-down releasing device 100 includes a 2-port valve 103 and a 3-port valve 104 and passages 110-115 are formed as shown in the Figure so as to supply the process gas and purge gas to a mass flow controller 102.

According to this shut-down releasing device 100, when the process gas is supplied, the 3-port valve 104 is opened with the 2-port valve 103 closed. Then, the process gas flowing from a flow-in passage 110 flows through the flow-in passage 111, passes through the 3-port valve 104 in an open state and is carried to the mass flow controller 102 from a flow-out passage 112. On the other hand, if the process gas in the passage is replaced, conversely, the 2-port valve 103 is opened and the 3-port valve 104 is closed. Consequently, a flow of the process gas is interrupted by the shut-down of the flow-in passage 111. Then, the purge gas flowing in from the flow-in passage 113 flows into the flow-out passage 114 through the 2-port valve 103, further flows to the flow-out passage 112 from the flow-in passage 115 through a valve chamber of the 3-port valve 104 in a closed state and is carried to the mass flow controller 102.

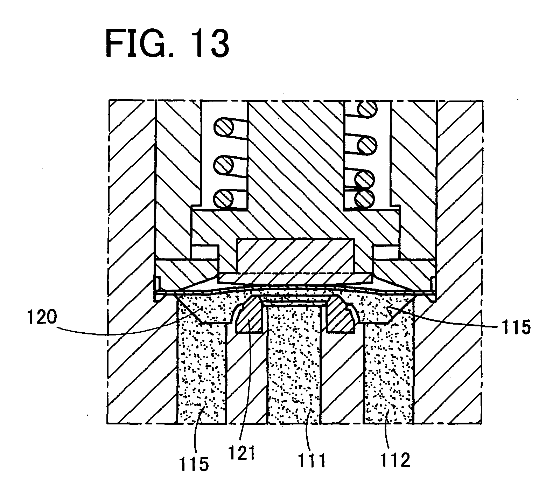

FIG. 13 is a sectional view of the 3-port valve 104, which constitutes the shut-down releasing device 100 with its valve portion enlarged. This 3-port valve 104 has such a structure in which the flow-in passage 115 which allows purge gas to flow always communicates with the flow-out passage 112 communicating with the valve chamber 120, through which the process gas flows, through the same valve chamber 120. When replacing the process gas, the purge gas flows so as to push out the process gas left in the valve chamber 120 and the flow-out passage 112 with its own pressure, so that a state in which both the gases are mixed is eliminated quickly and only the purge gas comes to flow after a short time passes. Then, at this time, all the process gas in the valve chamber 120 is pushed away so that it is not deposited.

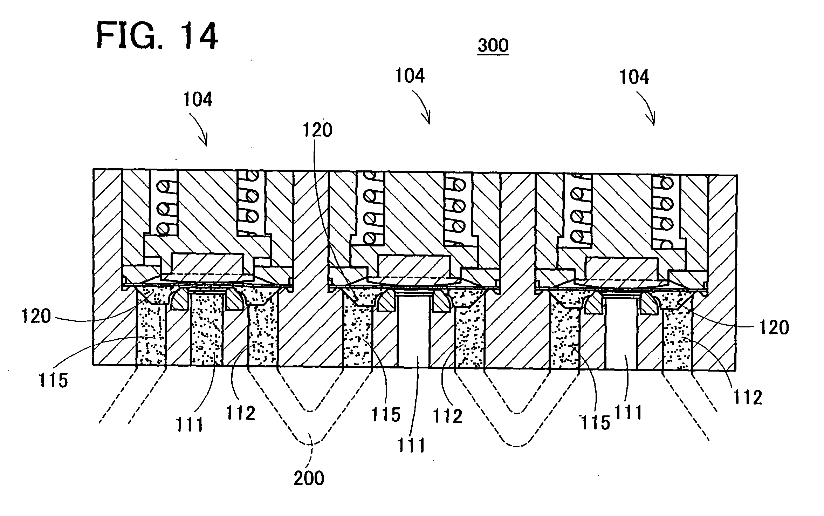

If the integrated gas valve as shown in FIG. 11 is constructed using the 3-port valve 104 described in the patent document 1, it can be considered to connect the purge gas passages in the 3-port valve 104 such that they are continuous. FIG. 14 is a diagram showing the valve portions of the integrated gas valve 300 in which three 3-port valves 104 are provided continuously. In this integrated gas valve 300, the flow-out passage 112 and the flow-in passage 115 are connected in series so as to form a sequential carrying gas flow passage 200 and the flow-in passage (process gas passage) 111 is connected to this carrying gas passage 200 through the valve. Therefore, this integrated gas valve 300 allows the carrying gas to flow through the carrying gas passage 200 even when all the 3-port valves 104 are closed like the block diagram shown in FIG. 11 and by opening a predetermined 3-port valve 104, the process gas can be fed into the carrying gas. Because the process gas passage 111 is so located as to communicate directly with the valve chamber 120 which constitutes the carrying gas passage 200 across the sealing portion of the valve, it has no dead space.

### (Patent document 1) Japanese Unexamined Patent Publication No.2001-254857 (pages 3, 4, FIGS. 1, 2)

However, because the carrying gas passage 200 in the integrated gas valve 300 is so constructed as to pass through the valve chamber 120 in the 3-port valve 104, the shape of the passage section and the sectional area are largely changed between the passage portions 112, 115 and the valve chamber portion 120. Thus, when the carrying gas flows from the narrow passage portion 112 to the wide valve chamber portion 120, changes such as a quick drop in gas pressure occur so that the flow velocity drops and a turbulence occurs in the flow of the carrying gas. Therefore, if the process gas is supplied from the process gas passage 111 of a predetermined 3-port valve 104, it flows into the valve chamber 120 in which particularly the flow of the carrying gas is turbulent and consequently, the flow of the process gas is disturbed.

By the way, the diffusion of the process gas has been taken as a problem because precision in semiconductor manufacturing process has been improved. That is, the reason is that to form a thin uniform film, a small amount of the process gas needs to be supplied in a concentrated manner to some extent. However, the process gas, which enters into the carrying gas and flows together, is diffused as seen in the integrated gas valve 300 and if it is carried to the reactor in that condition, it is difficult to form thin uniform film, which affects badly manufacturing of semiconductor. For the reason, there has been strongly demanded an integrated gas valve in which the process gas flows without any diffusion when it is supplied into the carrying gas.

The present invention has been achieved in views of the above-described circumstances and an object of the invention is to provide an integrated gas valve in which there is no turbulent portion in the carrying gas so that the process gas supplied into the carrying gas is not diffused.

### DISCLOSURE OF INVENTION

The integrated gas valve of the present invention for achieving the above-described object is characterized in comprising a plurality of opening/closing valves in each of which a valve element is brought into contact with and separated from a valve seat by an actuator to communicate and shut off a valve port with and from a valve chamber, each of the opening/closing valves including a first passage formed through a valve main body so as to be branched midway from the valve port and a second passage formed in the valve main body to extend from an inlet port to the valve chamber, wherein the plurality of opening/closing valves are arranged in line to form a main passage in which the first passages are connected to each other in series directly or through a connecting passage and the second passage of each opening/closing valve is connected to the main passage through the valve chamber and the valve port.

Further, the integrated gas valve of the present invention is characterized in comprising a plurality of opening/closing valves in each of which a valve element is brought into contact with and separated from a valve seat by an actuator to communicate and shut off a valve port with and from a valve chamber, each of the opening/closing valves including a first passage formed through a valve main body so as to be branched midway from the valve port and a second passage formed in the valve main body to extend from an inlet port to the valve chamber, wherein the plurality of opening/closing valves are arranged in pairs, forming two lines, to construct a first main passage formed by the first passages of ones of the paired opening/closing valves so that the first passages are connected in series directly or through a connecting passage to each other, and a second main passage formed by the first passages of the other ones of the paired opening/closing valves so that the first passages are connected in series directly or through a connecting passage, and in each pair of the opening/closing valves, a single second passage including an inlet port is connected to the first main passage and the second main passage through each valve chamber and each valve port.

In this case, the first main passage and the second main passage are preferred to have equal passage sectional areas. Further, it is preferred that the second passage provides communication between one inlet port and the valve chamber of one of the paired opening/closing valves, and further communication between that valve chamber and the valve chamber of the other one of the paired opening/closing valves.

Further, the gas integrated valve of the present invention is preferred to be so constructed that the plurality of opening/closing valves are integrally mounted on a base and the first passages of the opening/closing valves are connected to each other through the connecting passage formed in the base while the main passage is formed by the first passage and the connecting passage.

The integrated gas valve of the present invention is preferred to be so constructed that the first passage in the opening/closing valve and the connecting passage in the base are formed of through holes having the same diameter and the main passage formed of the connected first passage and connecting passage has a substantially constant passage sectional area through its entire length.

Further, the integrated gas valve of the present invention is preferred to be so constructed that the first passage of the opening/closing valve is formed of a V-shaped passage and the valve port is connected to a bent portion at the vertex of the first passage.

The integrated gas valve of the present invention is preferred to be so constructed that the first passage formed of the V-shaped passage is formed with the vertex being at a position near a sealing portion between the valve element and the valve seat to such an extent that fluid remaining in the valve port during valve-closing time is swept away by fluid flowing through the main passage.

Then, for example, if the integrated gas valve of the present invention is applied to a semiconductor manufacturing apparatus in which with the carrying gas kept flowing into the reactor preliminarily, of a plurality of process gases, a predetermined process gas is selectively supplied into a flow of the carrying gas, the carrying gas is supplied to the main passage formed to communicate with the first passage and a plurality of opening/closing valves are turned into a closed state and different process gases are supplied to the second passage. Then, if an actuator is selectively operated to open a valve of a plurality of opening/closing valves, the second passage communicates with the main passage so that a specific process gas flows into the carrying gas and is carried to the reactor.

Further, in case of an integrated gas valve in which a pair of opening/closing valves is provided continuously, the first main passage is connected to the reactor and the second main passage is connected to a recovery container, so that the carrying gas is always supplied through the first main passage and the second main passage. Then, of each paired opening/closing valves, the opening/closing valve on the first main passage side is closed while the opening/closing valve on the second main passage side is kept open. Thus, various kinds of the process gases supplied to the second passage flows to the second main passage side whose valve is kept open, it always flows through the second passage. Then, if the opening and closing of a specific pair of the opening/closing valves are selectively switched over to invert the opening and closing, the process gas flowing from the second passage to the second main passage is converted to the fist main passage and carried to the reactor.

### BRIEF DESCRIPTION OF DRAWINGS

FIG. 1 is a plan view showing an integrated gas valve according to a first embodiment;
FIG.2 is a diagram showing a sectional view of the integrated gas valve according to the first embodiment taken along A-A in FIG.1;
FIG.3 is a diagram showing a sectional view of the integrated gas valve according to the first embodiment taken along B-B in FIG.1;
FIG.4 is a block diagram showing the integrated gas valve according to the first embodiment;
FIG.5 is a sectional view showing a valve block according to the first embodiment;
FIG.6 is a plan view showing a base block according to the first embodiment;
FIG.7 is a diagram showing a sectional view of an integrated gas valve according to a second embodiment taken along B-B in FIG.1;
FIG.8 is a plan view showing an integrated gas valve according to a third embodiment;
FIG.9 is a diagram showing a sectional view of the integrated gas valve according to the third embodiment taken along G-G in FIG.8;
FIG.10 is a diagram showing a sectional view of the integrated gas valve according to the third embodiment taken along H-H in FIG.8;
FIG.11 is a block diagram showing a conventional integrated gas valve;
FIG.12 is a diagram showing a shut-off releasing device described in Patent document 1;
FIG.13 is a sectional view of a 3-port valve, which constitutes the shut-down releasing device, with its valve portion enlarged.
FIG.14 is a sectional view showing the integrated gas valve considered by an opening/closing valve, which constitutes a conventional shut-off releasing devise.

### BEST MODE FOR CARRYING OUT THE INVENTION

### [First embodiment]

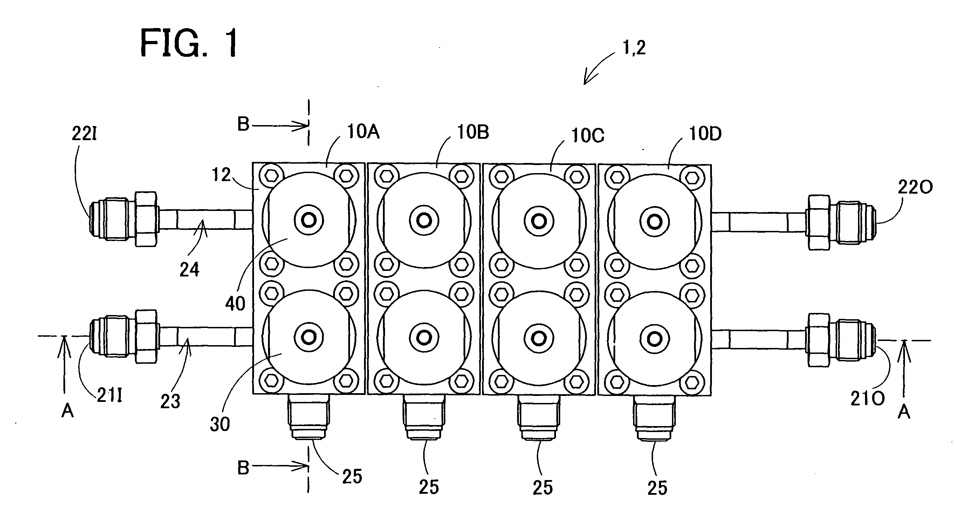

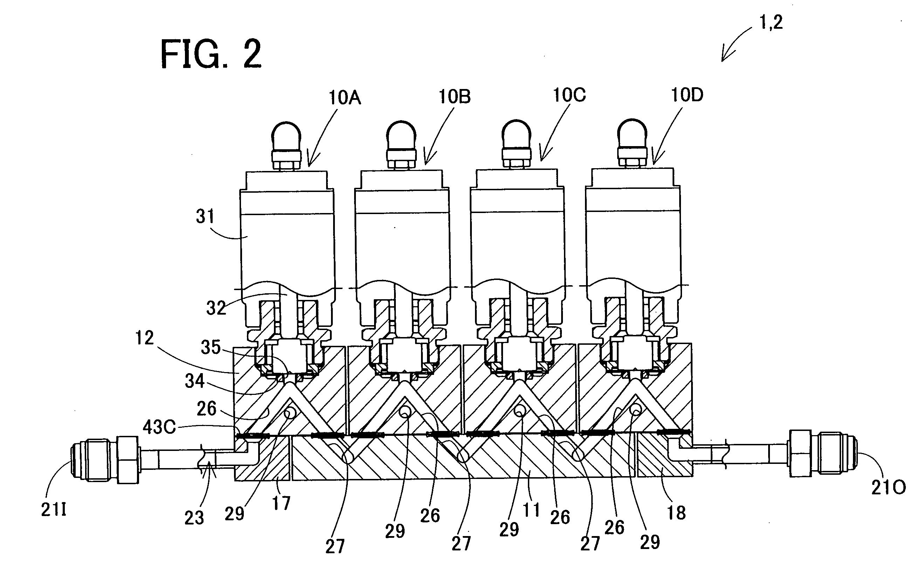

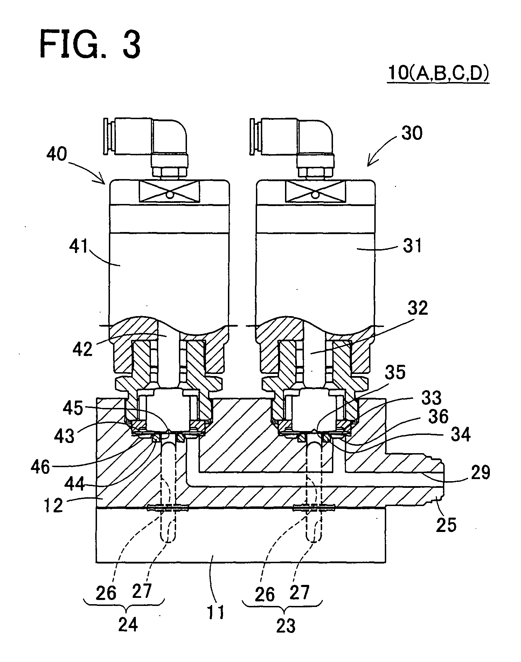

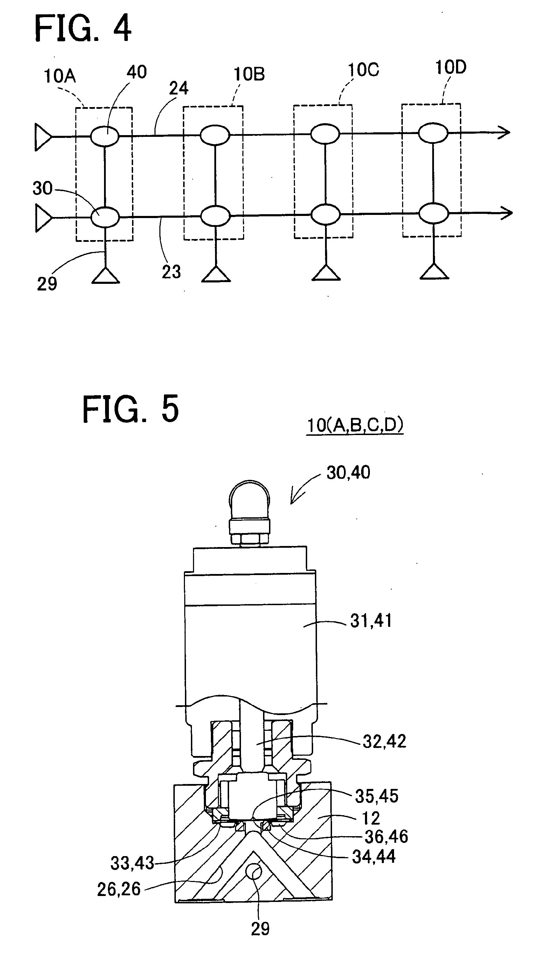

Next, a first embodiment of the integrated gas valve of the present invention will be described in detail with reference to the accompanying drawings. FIG. 1 is a plan view showing the integrated gas valve 1 of this embodiment. FIG. 2 is a diagram showing a sectional view taken along A-A of FIG. 1, FIG. 3 is a diagram showing a sectional view taken along B-B in FIG. 1 and FIG. 4 is a block diagram showing the integrated gas valve of this embodiment.

In the integrated gas valve 1 of this embodiment, four valve blocks 10A, 10B, 10C, 10D each having the same structure are arranged on a base block 11. Two passages for supplying the carrying gas are formed in the integrated gas valve 1 and one of them is a first carrying gas passage 23 which communicates an inlet port 21I with an outlet port 210 and the other one is a second carrying gas passage 24 which communicates an inlet port 22I with an outlet port 220. The first and second carrying gas passages 23, 24 are formed with the same structure and when the integrated gas valve 1 is seen through a plan view shown in FIG. 1, located on each straight line connecting the port 21I with 210 and the port 22I with 220.

On the other hand, when the integrated gas valve 1 is seen through a longitudinal sectional view shown in FIG. 2, the inlet ports 21I, 22I are connected through a block 17 and the outlet ports 210, 220 are connected through a block 18. The first carrying gas passage 23 which connects the ports 21I with 210 and the second carrying gas passage 24 which connects the port 22I with 220 are formed in wavy shape moving up and down while the valve blocks 10A-10D are connected to a passage formed in the base block 11 on which these are mounted, alternately.

Next, the structure of the respective valve blocks 10A-10D which constitute the integrated gas valve 1 will be described. Because the valve blocks 10A-10D have the same configuration, they will be described entirely as a valve block 10. As shown in FIG. 3, the valve block 10 comprises two opening/closing valves 30, 40 in which two actuators 31, 41 are assembled together on a body 12. The actuators 31, 41 are air cylinders, in which by moving valve rods 32, 42 connected to a piston (not shown) up and down, diaphragm valve bodies 33, 34 located down make contact with or leave valve seats 34, 44. That is, the diaphragm valve bodies 33, 43 leave the valve seats 34, 44 by being deflected due to their own elasticity and make contact with the valve seats 34, 44 due to a pressing force from the actuators 31, 41. The valve seats 33, 43 are formed around valve ports 35, 45 going through vertically and valve chambers 36, 46 are constructed of a groove formed annularly around those valve seats 33, 43.

FIG. 5 is a diagram of a sectional view of the opening/closing valves 30, 40 along the longitudinal direction of the integrated gas valve 1 in the same way as shown in FIG. 2. Therefore, reference numerals of the opening/closing valves 30, 40 are attached together.

As shown in FIG. 5, inverted-V shaped block passages 26, 26 are formed in the body 12 in which the valve parts of the opening/closing valves 30, 40 are formed, such that they are open to a bottom face. Then, as for the block passages 26, 26, the valve ports 35, 45 are branched at each of vertexes of the block passages 26, 26 which are bent from upward to downward.

In the body 12, a process gas passage 29 is formed in a direction perpendicular to the block passages 26, 42 from an inlet port 25 of process gas. The process gas passage 29 extends below the block passage 26 located on the side of the opening/closing valve 30 and rises at right angle at two positions so as to connect to the valve chamber 36 and the valve chamber 46. Thus, when the opening/closing valves 30, 40 of the valve block 10 are closed because the diaphragm valve bodies 33, 43 keep contact with the valve seats 34, 44, the process gas passage 29 is shut down from the block passages 26, 26 and when the opening/closing valves 30, 40 of the valve block 10 are opened because the diaphragm valve bodies 33, 34 are separated from the valve seats 34, 44, the process gas passage 29 is communicated with the block passages 26, 26 from the valve ports 35, 45 through the valve chambers 36, 46.

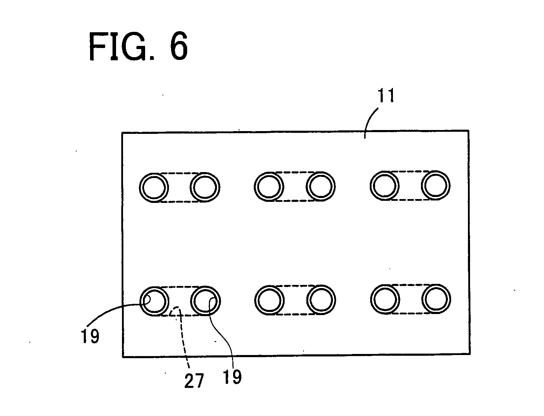

In the integrated gas valve 1, the valve blocks 10A-10D are mounted on the base block 11. FIG. 6 is a diagram showing a mounting surface of the base block 11 for mounting the valve blocks 10A-10D. Six openings 19, 19,.. are formed in two rows such that they are arranged in line on the top surface or the mounting surface of the base block 11, and the adjoining two openings 19, 19 are communicated with each other through a V-shaped connecting passage 27 as shown in FIG. 2. Then, when valve blocks 10A-10D are mounted on this base block 11 as shown in FIG. 2, the block passages 26 of the adjoining valve blocks 10A-10D are connected in series through the connecting passage 27. In the meantime, a gasket is fit to a connecting portion of the passage opening so as to ensure air tightness preventing leakage of fluid.

The block passages 26, 26 of the valve blocks 10A-10D are connected to the valve chambers 36, 46 through the valve ports 35, 45 and when the valve is closed, the valve chambers 36, 46 are shut down from the process gas passage 29. Then, all the block passage 26 in each valve blocks 10A-10D and the connecting passages 27 in each valve block 10A-10D are always connected to each other as if a single passage is formed continuously. According to this embodiment, the first carrying gas passage 23 and the second carrying gas passage 24 are formed of these block passages 26 and the connecting passage 27. Then, the first and second carrying gas passages 23, 24 are so constructed that the sectional shape of the passage is the same through the entire length and the sectional area of the passage is substantially the same because the block passage 26 of the valve blocks 10A-10D and the connecting passage 27 in the base block 11, which constitute the first and second carrying gas passages 23, 24, are through holes having the same diameter. In the meantime, this block passage 26 corresponds to "first passage" described in the scope of claim and the first and second carrying gas passages 23, 24 correspond to "main passage (first and second main passages)".

Next, the operation of the integrated gas valve 1 of this embodiment having the above-described structure will be described. First the inlet port 21I and the inlet port 22I are connected to a carrying gas supply source. Then, the reactor is connected to the outlet port 210 of the first carrying gas 23 and a recovery device is connected to the outlet port 220 of the second carrying gas 24. That is, process gas supplied to the second carrying gas passage 24 is not used for manufacturing and the process gas supplied to the first carrying gas 23 is used for manufacturing of the semiconductor.

A gas source of a predetermined process gas is connected to each inlet port 25 of the integrated gas valve 1. The fluid pressure of the process gas to be supplied from this inlet port 25 to the process gas passage 29 is set slightly higher than the fluid pressure of the carrying gas supplied through the first carrying gas passage 23 or the second carrying gas passage 24.

In the valve blocks 10A-10D, all the opening/closing valves 30 are kept closed while the opening/closing valves 40 are kept open. In this condition, all the process gas passages 29 in the valve blocks 10A-10D are communicated with the second carrying passage 24 through the valve chamber 46 and the valve port 45. In the integrated gas valve 1, carrying gas is always supplied to both the first and second carrying gas passages 23, 24. Thus, the process gas supplied from the inlet port 25 is always supplied into carrying gas flowing through the second carrying gas passage 24. Because the fluid pressure of process gas supplied through the process gas passage 29 is higher than the fluid pressure of carrying gas flowing through the second carrying gas passage 24 at this time, the carrying gas does not flow to the process gas side but the process gas flows to the carrying gas side.

Next, according to the semiconductor manufacturing process, a predetermined process gas is supplied successively to the first carrying gas passage 23 connected to the reactor. In the valve block 10 to which objective process gas is supplied, the opening/closing operation of the valve by the opening/closing valves 30, 40 is carried out. That is, when the process gas is supplied to the reactor, the opening/closing valve 30 is switched to open state and conversely, the opening/closing valve 40 is switched to closed state. Consequently, the process gas passage 29 is shut down from the second carrying gas passage 24 while communicated with the first carrying gas passage 23. Then, the process gas supplied from the inlet port 25 to the process gas passage 29 flows into carrying gas flowing through the first carrying gas passage 23 having a low fluid pressure and is carried to the reactor.

Next, the same process gas is supplied from the same inlet port 25 by changing its concentration. In this case, in the valve blocks 10, the opening/closing of the valve is changed to its original state temporarily by the opening/closing operation of the opening/closing valves 30, 40. That is, the opening/closing valve 30 on the side of the first carrying gas passage 23 is closed while the opening/closing valve 40 of the second carrying gas passage 24 is opened. Thus, after the concentration is changed, the supplied process gas is sent to the second carrying gas passage 24 and while it continues to be supplied, the concentration is stabilized. Then, the switching of the passage is carried out so that the opening/closing valve 30 on the side of the first carrying gas passage 23 is opened and the opening/closing valve 40 on the side of the second carrying gas passage 24 is closed. Consequently, the process gas whose concentration is stabilized is supplied through the first carrying gas passage 23 and carried to the reactor by the carrying gas.

Further, a condition in which the process gas flows into the first carrying gas passage 23 will be described by paying attention to the process gas passage 29. As shown in FIG. 3, the process gas supplied from the process gas inlet port 25 flows through the process gas passage 29 and supplied to the valve chamber 36 and the valve chamber 46 at the same time. Then, in the valve block 10 to which process gas not necessary for formation of film is supplied, the opening/closing valve 40 on the side of the second carrying gas passage 24 is opened and the opening/closing valve 30 on the side of the first carrying gas passage 23 is closed. Therefore, the process gas flowing from the process gas passage 29 to the valve chamber 36 is shut down there and the process gas flowing from the process gas passage 29 to the valve chamber 46 flows into the block passage 26 through the valve port 45 so that it flows into carrying gas flowing through the second carrying gas passage 24.

If the opening/closing valves 30, 40 are switched over at a predetermining timing, the process gas flowing to the second carrying gas passage 24 is shut down from a flow in the process gas passage 29 by the opening/closing valve 40. On the other hand, the flow of the process gas shut down by the opening/closing valve 30 flows from the valve port 35 by opening the valve into the carrying gas flowing through the first carrying gas passage 23 when it is closed and then is carried into the reactor.

In the integrated gas valve 1 of this embodiment, by keeping process gas always flowing to the side of the second carrying gas passage 24 and switching the opening/closing valves 30, 40 of the valve blocks 10A-10D at a necessary timing, the process gas flowing on the side of the second carrying gas passage 24 is switched to the side of the first carrying gas passage 23 and carried to the reactor.

Thus, in the integrated gas valve 1 of this embodiment, the first and second carrying gas passages 23, 24 comprises the block passage 26 and the connecting passage 27 and unlike a conventional example shown in FIG. 14, there is not a valve chamber 120 halfway of the passage so that space is expanded abruptly. That is, because it is constituted of only a passage, the shape of the passage section and sectional area of the passage are not changed through the entire passage but kept substantially constant. Consequently, when the carrying gas flows through the first and second carrying gas passages 23, 24, its fluid pressure is not changed or no turbulence is generated. Thus, when process gas flows into the carrying gas flowing through the first carrying gas passage 23, it is considered that it is never diffused by the time when it is carried to the reactor but it is carried in the state of laminar flow to some extent.

In the integrated gas valve 1 of this embodiment, the first and second carrying gas passages 23, 24 are constructed so that their sectional area thereof are equal. Thus, even if the flow of the process gas is changed from the second carrying gas passage 24 to the first carrying gas passage 23, little change occurs in the flow of the process gas. Thus, no overshoot or deflection in pressure is generated by opening/closing the valve and no pulsation is generated in the flow of the process gas. Then, even if the opening/closing of the valve is carried out in a short time like manufacturing of a semiconductor by flowing a very small amount of the process gas, stabilized flow rate control is enabled.

In the first carrying gas passage 23 in which the opening/closing valve 30 is closed, a portion on the valve port 35 acts as a dead space. However, because the valve port 35 is very shallow and located at the vertex of the inverted-V shaped block passage 26, the process gas flows out as if it is swept from the dead space just after the valve is closed. Therefore, in the integrated gas valve 1 of this embodiment, no process gas is deposited in the first carrying passage 23.

Further, in the integrated gas valve 1, the process gas flowing through the process gas passage 29 is set higher than the carrying gas flowing through the first and second carrying gas passages 23, 24 in term of fluid pressure when it is supplied. For the reason, when the process gas is supplied into the carrying gas by opening the opening/closing valves 30, 40, no carrying gas flows into the process gas passage 29 but the process gas is carried into the carrying gas securely. Further because the process gas flows in as if it is attracted into the carrying gas having a lower pressure, the process gas is not diffused itself but flows together into the carrying gas.

### [Second embodiment]

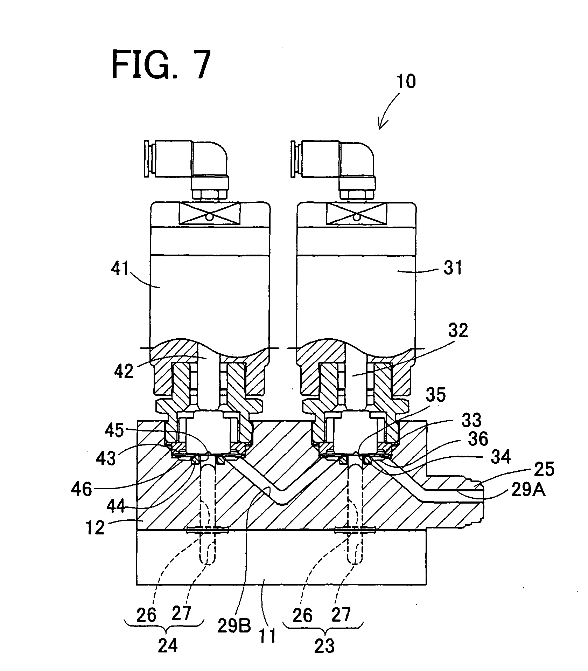

Next, the second embodiment of the integrated gas valve of the present invention will be described below with reference to the accompanying drawings. In the integrated gas valve of this embodiment, like the integrated gas valve 1 of the first embodiment, two carrying gas passages 23, 24 are formed and by switching the two opening/closing valves 30, 40 alternately, the process gas is supplied into carrying gas flowing therethrough. Thus, although the integrated gas valve of this embodiment is constructed in the same way as the integrated gas valve 1 of the first embodiment, the structure of the process gas passage for supplying the process gas to the carrying gas passages 23, 24 is different. Like reference numerals are attached to the same components as the integrated gas valve 1 and it will be described with reference to FIGS. 1, 2 and 4 appropriately. Then, FIG. 7 is a sectional view showing the integrated gas valve 2 of this embodiment through a sectional view taken along B-B in FIG. 1.

The structure of this integrated gas valve 2, which is equal to the structure of the integrated gas valve 1 of the first embodiment, will be described. In the integrated gas valve 2, as shown in FIGS. 1, 2, the four valve blocks 10A-10D are mounted on the base block 11. Then, the two carrying gas passages 23, 24 are provided as shown in FIG. 4 and two opening/closing valves 30, 40 are constructed on each of the valve blocks 10A-10D corresponding to the two passages. In the body 12, as shown in FIG. 2, valve ports 35, 45, which go through the center of each of the valve seats 34, 44 as shown in FIG. 2, are formed such that they are branched from the inverted-V shaped block passage 26. The block passages 26 of the respective valve blocks 10A-10D are connected in series through the V-shaped connecting passage 27 formed in the base block 11, so that the first and second carrying gas passages 23, 24 are constructed.

According to this embodiment, process gas passages shown in FIG. 7 are connected for the first and second carrying gases 23, 24. That is, a first process gas passage 29A is formed in the body 12 such that it communicates with the valve chambers 36 from the inlet port 25 of the process gas and further, a V-shaped second process gas passage 29B is formed such that it communicates with the other valve chamber 46 from this valve chamber 36. As the same way described in the first embodiment, the process gas passages 29A, 29B of this embodiment are so constructed that the process gas supplied from the inlet port 25 flows not directly to the valve chamber 46 but through the valve chamber 36 temporarily.

Next, the operation of the integrated gas valve 2 of this embodiment will be described. According to this embodiment also, the carrying gas is always fed through the first and second carrying gas passages 23, 24. Then, in the valve blocks 10A-10D, all the opening/closing valves 30 are kept closed and all the opening/closing valves 40 are kept open. Consequently, various kinds of process gases supplied from the inlet port 25 of each of the valve blocks 10A-10D passes through the process gas passage 29A and then flows into the valve chamber 36. However, the process gas does not flow into the first carrying gas passage 23 because the opening/closing valve 30 is closed and further flows into the valve chamber 46 through the process gas passage 29B. Then, the process gas flows into the block passage 26, namely the second carrying gas passage 24 through the valve port 45 because the opening/closing valve 40 is opened.

The carrying gas does not flow into the side of the process gas passage 29 because the fluid pressure of the process gas is higher than the fluid pressure of the carrying gas flowing through the first and second carrying gas passages 23, 24, but the process gas always flows into the side of the first and second carrying gas passages 23, 24. All the process gas used for manufacturing of the semiconductor always flows into the carrying gas flowing through the second carrying gas passage 24, so as to prepare for feeding into the reactor connected to the first carrying gas passage 23.

Then, according to the semiconductor manufacturing process, predetermined process gas is supplied successively to the first carrying gas passage 23 connected to the reactor. In the valve blocks 10A-10D corresponding to each process gas, the switching operation of the opening/closing valves 30, 40 is carried out. That is, when supplying the predetermined process gas to the reactor, the opening/closing valve 30 on the side of the first carrying gas passage 23 is opened and conversely, the opening/closing valve 40 on the side of the second carrying gas passage 24 is closed so as to switch the opening/closing of the valve. As a result, the process gas flowing up to the second carrying gas passage 24 flows form the valve chamber 36 into the block passage 26, that is, the first carrying gas passage 23 through the valve port 35. On the other hand, the flow to the second carrying gas passage is shut down.

Next, the same process gas is supplied from the process gas inlet port 25 by changing its concentration. For this purpose, the opening/closing state of the opening/closing valves 30, 40 is returned to their original state at the same valve block 10. That is, the opening/closing valve 30 on the side of the first carrying gas passage 23 is closed and the opening/closing valve 40 on the side of the second carrying gas passage 24 is opened. For the reason, the process gas supplied by changing its concentration is supplied to the second carrying gas passage 24 and its concentration is stabilized as a predetermined time elapses. Then, the opening/closing valves 30, 40 are switched over, so that the opening/closing valve 30 on the side of the first carrying gas passage 23 is opened while the opening/closing valve 40 on the side of the second carrying gas passage 24 is closed. The process gas whose concentration is changed is supplied to the first carrying gas passage 23 and carried to the reactor by the carrying gas.

The integrated gas valve 2 of this embodiment adopts such a structure in which the passage for feeding process gas to the second carrying gas passage 24 passes through the valve chamber 36 temporarily by means of the process gas passages 29A, 29B. Thus, even if supply of the process gas to the first carrying gas passage 23 is stopped, the process gas flows from the valve chamber 36 to the second carrying gas passage 24 through the same passage. Therefore, even when the process gas is supplied by changing its concentration, only the process gas whose concentration is changed is supplied to the reactor because process gas before the changing does not remain.

In the integrated gas valve 2 of this embodiment, the first carrying gas passage 23 having the same structure as the integrated gas valve 1 of the first embodiment is so constructed that it does not pass through any valve chamber and the shape of the passage section and the sectional area of the passage are substantially constant through the entire passage. Thus, when the carrying gas flows through the first carrying gas passage 23, its fluid pressure is not changed and no turbulence is generated. Thus, even if process gas is fed into the carrying gas flowing through the first carrying gas passage 23, it is never diffused by the time when it reaches the reactor but it is carried in the form of laminar flow to some extent.

Because the passage sectional areas of the first and second carrying gas passages 23, 24 are formed to be equal like the first embodiment, even if the flow of the process gas is switched over, no overshoot or deflection in pressure is generated due to the opening/closing of the valve and no pulsation occurs in the flow of the process gas. Then, even if the opening/closing of the valve is carried out in a short time like manufacturing of a semiconductor by feeding an extremely small amount of the process gas, stabilized control of the flow rate is enabled. Further, because the process gas remaining in the valve port 35 which acts as a dead space is carried together with the flow of the carrying gas, no process gas remains in the first carrying passage 23. Further, the process gas flows into the carrying gas securely due to a difference in pressure between the carrying gas and the process gas, so that the process gas is not diffused itself but flows together into the carrying gas.

### [Third embodiment]

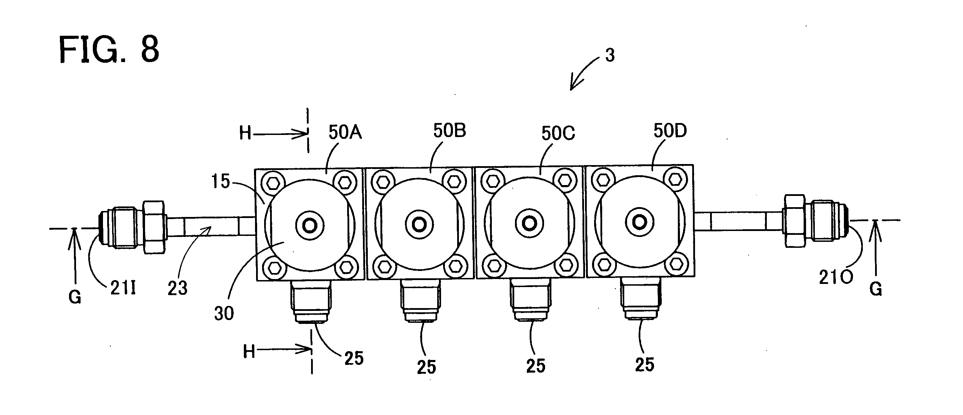

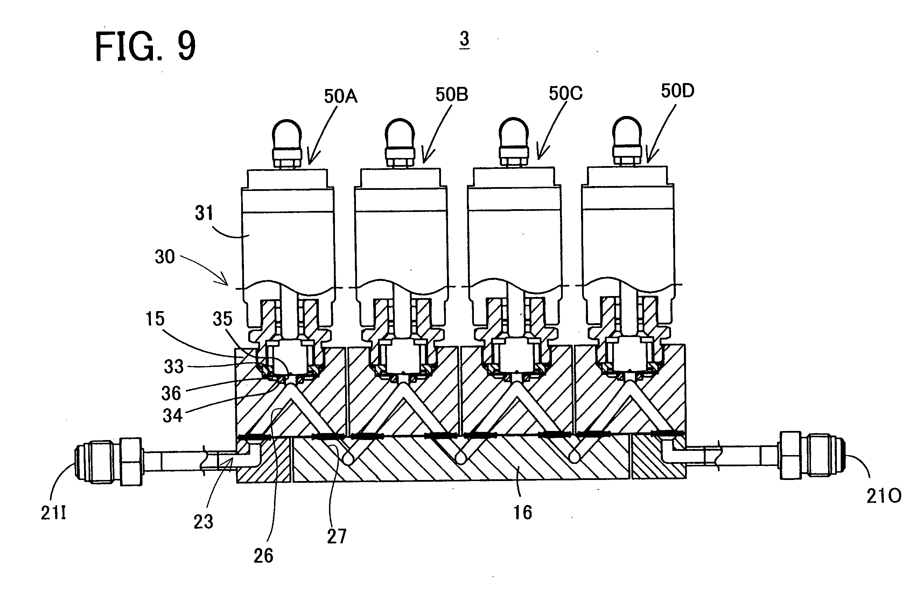

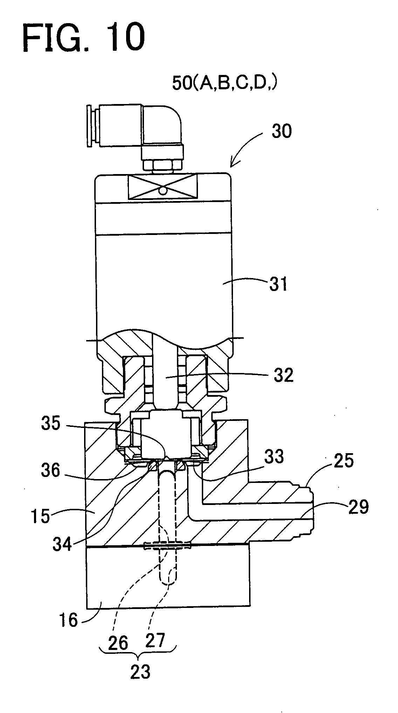

Next, the third embodiment of the integrated gas valve of the present invention will be described with reference to the accompanying drawings. FIG. 8 is a plan view showing the integrated gas valve of this embodiment. FIG. 9 is a diagram showing a section taken along G-G and FIG. 10 is a diagram showing a section taken along H-H of FIG. 8. The integrated gas valve 3 of this embodiment is achieved by omitting the second carrying gas passage 24 from the structure of the integrated gas valve 1 of the first embodiment. That is, of the two opening/closing valves 30, 40 installed in the valve block 10, the opening/closing valve 40 on the side of the second carrying gas passage 24 and its related passage are omitted. Therefore, because the structure of the side of the opening/closing valve 30 is equal to that of the first embodiment, like reference numerals are attached to the same components as the integrated gas valve 1.

In this integrated gas valve 3, valve blocks 50A-50D each composed of an opening/closing valve 30 are mounted on the base block 16. In the integrated gas valve 3, a single carrying gas passage 23 is formed from the inlet port 21I to the carrying gas outlet port 210 and in each of the respective valve blocks 50A-50D, the process gas passage 29 is formed so that it communicates from the process gas inlet port 25 to the carrying gas passage 23.

In the valve blocks 50A-50D, communication and shut-down between the process gas passage 29 and the carrying gas passage 23 are operated in the body 15 by the opening/closing valve 30. That is, the inverted-V shaped block passage 26 is formed inside the body 15 and communicates with the process gas passage 29 communicating with the valve chamber 36 through the valve port 35. Further, the V-shaped block passages 26 are formed in the base block 16 with an interval and the block passages 26, 41, .. in the mounted valve blocks 50A-50D are connected in series to form a single carrying gas passage 23. That is, in the carrying gas passage 23 of this integrated gas valve 3, the block passage 26 and the connecting passage 27 are connected in series.

Thus, the integrated gas valve 1 of this embodiment is so constructed that the shape of the passage section and the passage sectional area are substantially constant through the entire passage because the first carrying gas passage 23 comprising the block passage 26 and the connecting passage 27 is constructed of only a passage including no valve chamber 120 halfway as shown in FIG. 14. For the reason, when the carrying gas flows through the first carrying gas passage 23, the fluid pressure is never changed or no turbulence is generated. Thus, even if the process gas is fed into the carrying gas flowing through the first carrying gas passage 23, it is never diffused by the time when it reaches the reactor but it is carried in the form of laminar flow to some extent.

Like the first embodiment, no process gas is left in the first carrying passage 23 because process gas deposited in the valve port 35 acting as a dead space is carried together with a flow of the carrying gas. Further, because the process gas flows into the carrying gas securely due to a difference in pressure between the carrying gas and the process gas, the process gas is never diffused or flows together into the carrying gas.

On the other hand, this integrated gas valve 3 cannot avoid overshoot or change in pressure due to opening/closing of the valve port 35 because supply of the process gas is stopped temporarily by closing the valve and then the gas is supplied by opening the valve again. However, these changes can be estimated to some extent and are no problem in usage except a case where a very small amount of gas is supplied accurately. Further, this integrated gas valve 3 induces reductions in cost and occupied area because the quantity of valves used is half that of the integrated gas valve 1.

An embodiment of the integrated gas valve has been described above. The present invention is not restricted to these embodiments but may be modified in various ways within a scope not departing from the gist of the present invention.

For example, although according to the above described embodiments, a plurality of the valve blocks 10 are mounted on the base block 11 and the carrying gas passage 23 is constructed by connecting the block passage 26 by means of the connecting passage 27, it is permissible to form the block passage in the valve block 10 linearly so that it communicates directly.

Further, although according to the respective embodiments, the integrated gas valves 1, 2 are constructed by connecting the four valve blocks 10, 11, the quantity of the valve blocks 10, 11 is not restricted to this example but may be modified appropriately depending on the kind and quantity of necessary process gases.

Further, although the body 12 of the valve block 10 of the integrated gas valve 1 is constructed in a single unit, it may be constructed by connecting valve blocks each having a single actuator like the valve block 11 of the integrated gas valve 3.

### INDUSTRIAL APPLICABILITY

According to the integrated gas valve of the present invention, as evident from the above description, the main passage through which the carrying gas is always supplied does not go through any valve chamber, which is a wide space, halfway unlike the conventional example, but is composed of only a passage for supplying gas in which a first passages are connected in series. Thus, no large changes are applied to the shape of the passage section and passage sectional area and no turbulence is generated in a flow of the carrying gas. If process gas is supplied into such carrying gas flowing smoothly, the process gas can be supplied to the reactor without being diffused.

According to the integrated gas valve of the present invention, with the carrying gas supplied through the first main passage and the second main passage, the process gas is supplied by switching over a pair of the opening/closing valves. Consequently, if the concentration is changed halfway, it is possible to switch over the opening/closing valve after the concentration is stabilized and then supply the process gas to the reactor. If such two main passages are provided, the main passage does not pass through any valve chamber having a wide space halfway unlike the conventional example and is composed of only a passage in which the first passages are connected in series. Consequently, no considerable changes are applied to the shape of the passage section and the passage sectional area and no turbulence is generated in the flow of the carrying gas. If the process gas is supplied into such carrying gas flowing smoothly, the process gas can be supplied to the reactor without being diffused.

Further because by setting the passage sectional areas of the first main passage and the second main passage equal to each other, no change in pressure is generated even if the flow of the process gas is switched over. Consequently, even if the valve is opened or closed in a short time like a case of manufacturing a semiconductor by flowing an extremely small amount of the process gas, stabilized flow rate control is enabled.

If by forming the second passage by connecting the valve chambers of a pair of the opening/closing valves in series, the process gas is supplied to the second main passage through an opening/closing valve located at a far position from the inlet port and then by switching over the valve, it is supplied to the first main passage through an opening/closing valve located at a near position, the process gas before the changing is not left in the second passage when it is supplied by changing its concentration. Consequently, only the process gas is supplied to the first main passage having the changed concentration.

Further, in the integrated gas valve of the present invention, by mounting respective opening/closing valves on the base, the configuration of the integrated gas valve can be simplified. By forming the first passage of each opening/closing valve and the connecting passage in the base with the same diameter through hole, the entire main passage can be formed into a passage having a constant sectional area and a further stabilized flow of the carrying gas can be obtained.

According to the integrated gas valve of the present invention, although gas deposit is generated in a valve port portion from a sealing portion between the valve element and the valve seat to the main passage when the opening/closing valve is closed, when the carrying gas flows through the V-shaped first passage, the process gas deposited in the valve port is scratched out by the carrying gas as it flows back at a vertex thereof.

## Claims

1. An integrated gas valve comprising:
a plurality of opening/closing valves in each of which a valve element is brought into contact with and separated from a valve seat by an actuator to communicate and shut off a valve port with and from a valve chamber, each of the opening/closing valves including a first passage formed through a valve main body so as to be branched midway from the valve port and a second passage formed in the valve main body to extend from an inlet port to the valve chamber,
wherein the plurality of opening/closing valves are arranged in line to form a main passage in which the first passages are connected to each other in series directly or through a connecting passage and the second passage of each opening/closing valve is connected to the main passage through the valve chamber and the valve port.

2. An integrated gas valve comprising:
a plurality of opening/closing valves in each of which a valve element is brought into contact with and separated from a valve seat by an actuator to communicate and shut off a valve port with and from a valve chamber, each of the opening/closing valves including a first passage formed through a valve main body so as to be branched midway from the valve port and a second passage formed in the valve main body to extend from an inlet port to the valve chamber,
wherein the plurality of opening/closing valves are arranged in pairs, forming two lines, to construct a first main passage formed by the first passages of ones of the paired opening/closing valves so that the first passages are connected in series directly or through a connecting passage to each other, and a second main passage formed by the first passages of the other ones of the paired opening/closing valves so that the first passages are connected in series directly or through a connecting passage, and
in each pair of the opening/closing valves, a single second passage including an inlet port is connected to the first main passage and the second main passage through each valve chamber and each valve port.

3. The integrated gas valve according to claim 1 or 2,
wherein the plurality of opening/closing valves are integrally mounted on a base and the first passages of the opening/closing valves are connected to each other through the connecting passage formed in the base while the main passage is formed by the first passage and the connecting passage.

4. The integrated gas valve according to claim 3,
wherein the first passage in the opening/closing valve and the connecting passage in the base are formed of through holes having the same diameter and the main passage formed of the connected first passage and connecting passage has a substantially constant passage sectional area through its entire length.

5. The integrated gas valve according to claim 1 or 2,
wherein the first passage of the opening/closing valve is formed of a V-shaped passage and the valve port is connected to a bent portion at the vertex of the first passage.

6. The integrated gas valve according to claim 4,
wherein the first passage formed of the V-shaped passage is formed with the vertex being at a position near a sealing portion between the valve element and the valve seat to such an extent that fluid remaining in the valve port during valve-closing time is swept away by fluid flowing through the main passage.

7. The integrated gas valve according to claim 2,
wherein the first main passage and the second main passage have equal passage sectional areas.

8. The integrated gas valve according to claim 2,
wherein the second passage provides communication between one inlet port and the valve chamber of one of the paired opening/closing valves, and further communication between that valve chamber and the valve chamber of the other one of the paired opening/closing valves.
